(19) Europäisches Patentamt
European Patent Office
Office européen des brevets

(11) **EP 2 992 584 B1**

(12) **FASCICULE DE BREVET EUROPEEN**

(45) Date de publication et mention de la délivrance du brevet:
**20.12.2017 Bulletin 2017/51**

(51) Int Cl.:
***B60L 11/18*** *(2006.01)*     ***H01M 10/48*** *(2006.01)*
***H02J 7/00*** *(2006.01)*     ***H01M 10/44*** *(2006.01)*

(21) Numéro de dépôt: **14726704.1**

(22) Date de dépôt: **28.04.2014**

(86) Numéro de dépôt international:
**PCT/FR2014/051014**

(87) Numéro de publication internationale:
**WO 2014/177799 (06.11.2014 Gazette 2014/45)**

(54) **PROCÉDÉ ET SYSTÈME DE CHARGE D'UNE BATTERIE DE VÉHICULE AUTOMOBILE EN FONCTION DE LA TEMPÉRATURE**

VERFAHREN UND SYSTEM ZUM LADEN EINER KRAFTFAHRZEUGBATTERIE NACH DER TEMPERATUR

METHOD AND SYSTEM FOR CHARGING A MOTOR VEHICLE BATTERY ACCORDING TO THE TEMPERATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2013 FR 1353914**

(43) Date de publication de la demande:
**09.03.2016 Bulletin 2016/10**

(73) Titulaire: **RENAULT s.a.s.**
**92100 Boulogne-Billancourt (FR)**

(72) Inventeurs:
• **DELOBEL, Bruno**
**75015 Paris (FR)**
• **MARIE, Julien**
**92330 Sceaux (FR)**
• **RICAUD, Anais**
**78280 Guyancourt (FR)**
• **SOULIER, Juan-Pablo**
**75011 Paris (FR)**
• **MARCHAL, Laureline**
**78280 Guyancourt (FR)**

(56) Documents cités:
**WO-A1-2012/156401    JP-A- 2001 037 093**
**US-A1- 2002 120 906**

• **LI J ET AL: "The effects of pulse charging on cycling characteristics of commercial lithium-ion batteries", JOURNAL OF POWER SOURCES, ELSEVIER SA, CH, vol. 102, no. 1-2, 1 décembre 2001 (2001-12-01), pages 302-309, XP004331050, ISSN: 0378-7753, DOI: 10.1016/S0378-7753(01)00820-5**

# Description

L'invention a pour domaine technique le contrôle de la charge de batteries d'un véhicule automobile, et plus particulièrement la charge de telles batteries à basse température.

Les performances (puissance, énergie, durabilité) d'une batterie sont très sensibles à la température d'utilisation. A basse température, la batterie est moins puissante, débite moins d'énergie et est sujette à une dégradation lors de sa charge, tandis qu'à haute température, la batterie présente des performances optimales en termes de puissance et d'énergie.

De l'état de la technique, on connait les documents suivants.

La demande de brevet JP2001037093A divulgue l'utilisation d'un courant de charge oscillant à une fréquence comprise entre 103 Hz et quelques centaines de Hz avec une amplitude de quelques mV.

L'application de cet enseignement à des batteries Li-Ion n'est pas possible dans la mesure où la fréquence de 1kHz spécifiée est trop élevée. En effet, cette fréquence correspond à la partie inductive du spectre d'impédance soit l'impédance des parties métalliques (i. e. collecteur de courant) et des composés conducteurs électronique (i.e. carbone conducteur). De plus, cette demande de brevet décrit principalement l'amélioration à une tension constante avec une oscillation en tension de l'ordre de quelques mV qui améliore les performances en stockage de la cellule.

Le document US7227336B1 détermine la fréquence de charge d'une batterie à partir d'un coefficient de diffusion.

Les documents FR2943188, FR2964510 et FR2974253 divulguent la modulation du courant de charge de la batterie. Par contre, ces documents ne divulguent rien concernant l'influence de la température sur le choix de cette fréquence.

Le document "The effects of pulse charging on cycling characteristics of commercial lithium-ion batteries" (LI J ET AL, JOURNAL OF POWER SOURCES, ELSEVIER SA, CH, vol. 102, no. 1-2, 1er décembre 2001, pages 302-309, XP004331 050) divulgue des procédés de charge par impulsion de batteries lithium-ion, qui ne prennent pas non plus en compte l'influence de la température sur le choix de cette fréquence.

Il existe donc un besoin pour un système et un procédé de charge à basse température, optimisés pour diminuer le temps de charge et la dégradation de la batterie lors de la charge.

Un objet de l'invention est un procédé de charge d'une batterie de véhicule automobile, optimisé en fonction de la température de ladite batterie, selon la revendication indépendante 1, au cours duquel on met en oeuvre les étapes suivantes :

on détermine la fréquence de résistance de l'électrolyte de la batterie,

on détermine la fréquence de résistance de transfert de charge de la batterie, et

on charge la batterie avec un courant à une fréquence de courant de charge supérieure à la fréquence de résistance de l'électrolyte de la batterie et inférieure à la fréquence de résistance de transfert de charge de la batterie.

A partir d'une représentation complexe de l'impédance en fonction de la fréquence du courant de charge, on peut déterminer la fréquence de résistance de l'électrolyte comme la fréquence de l'impédance présentant une valeur nulle de sa partie imaginaire et la plus petite valeur de la partie réelle et la fréquence de résistance de transfert de charge comme la fréquence de l'impédance présentant une valeur minimale de sa partie imaginaire et la plus grande valeur de la partie réelle.

A partir d'une représentation de l'impédance en fonction du déphasage du courant de charge, on peut déterminer la fréquence de résistance de l'électrolyte comme la fréquence pour laquelle le déphasage s'annule et la fréquence de résistance de transfert de charge comme la fréquence pour laquelle la dérivée du déphasage en fonction de la fréquence s'annule.

A partir d'une représentation partie imaginaire sur l'impédance de la cellule en fonction de la fréquence du courant de charge, on peut déterminer la fréquence de résistance de l'électrolyte comme la fréquence pour laquelle la partie imaginaire s'annule et la fréquence de résistance de transfert de charge comme la fréquence pour laquelle la dérivée de la partie imaginaire en fonction de la fréquence s'annule.

La fréquence de courant de charge peut être comprise entre 10Hz et 300Hz, de préférence égale à 100Hz.

On peut déterminer de nouvelles fréquences de résistance de l'électrolyte de la batterie et de résistance de transfert de charge de la batterie lorsque la température change.

Un autre objet de l'invention est un système de charge d'une batterie de véhicule automobile optimisé en fonction de la température de ladite batterie, selon la revendication indépendante 7, comprenant un moyen de détermination de la fréquence de résistance de l'électrolyte de la batterie, un moyen de détermination de la fréquence de résistance de transfert de charge de la batterie, et un moyen de commande du courant de charge de la batterie apte à commander la charge de la batterie par un courant présentant une fréquence supérieure à la fréquence de résistance de l'électrolyte de la batterie et inférieure à la fréquence de résistance de transfert de charge de la batterie.

Le système peut comprendre un moyen d'ajustement de la fréquence du courant de charge en fonction de la température de la batterie, le moyen d'ajustement étant apte à commander les moyens de détermination de sorte que la fréquence de résistance de l'électrolyte de la batterie et la fréquence de résistance de transfert de charge de la batterie soient déterminées à nouveau lorsque la température change.

Le moyen de détermination de la fréquence de résistance de l'électrolyte de la batterie et le moyen de détermination de la fréquence de résistance de transfert de charge de la batterie peuvent comprendre chacun une cartographie de la fréquence du courant de charge en fonction de la température.

Le moyen de détermination de la fréquence de résistance de l'électrolyte de la batterie et le moyen de détermination de la fréquence de résistance de transfert de charge de la batterie peuvent comprendre chacun un dispositif de spectrographie de l'impédance de la batterie.

D'autres buts, caractéristiques et avantages apparaîtront à la lecture de la description suivante donnée uniquement en tant qu'exemple non limitatif et faite en référence aux dessins annexés sur lesquels :

- la figure 1 illustre une représentation de l'impédance dans l'espace complexe en fonction de la fréquence,
- la figure 2 illustre de façon schématique l'impédance dans l'espace complexe en fonction de la fréquence,
- la figure 3 illustre d'une représentation de l'impédance en fonction du déphasage,
- la figure 4 illustre une représentation de la partie imaginaire sur l'impédance de la cellule en fonction de la fréquence,
- la figure 5 illustre les effets d'un courant de fréquence égale à 100Hz sur une cellule de batterie, et
- la figure 6 illustre l'évolution du déphasage en fonction de la fréquence à différentes températures.

Le procédé de commande de la charge d'une batterie permet d'améliorer la charge d'une batterie à basse température. Le principe est basé sur l'utilisation de la spectroscopie d'impédance pour estimer la fréquence du courant de charge à appliquer.

Une spectroscopie d'impédance peut être effectuée soit à bord du véhicule à l'aide de la méthode décrite dans l'état de l'art (Impedance Spectroscopy by Voltage-Step Chronoamperometry Using the Laplace Transform Method in a Lithium-Ion Battery, Journal of The Electrochemical Society, 147 (3) 922-929 (2000)), soit au préalable à l'aide d'une mesure d'impédance. En première approche, la spectroscopie d'impédance consiste à faire varier la fréquence du courant de charge de la batterie tout en mesurant l'impédance de la dite batterie. On obtient alors une variation de l'impédance de la batterie en fonction de la fréquence.

Dans un cas, la spectroscopie d'impédance effectuée à bord permet de déterminer la fréquence de charge.

Dans un autre cas, la fréquence de charge à utiliser est déterminée et fixée lors de la conception du système de charge afin d'améliorer la charge de la batterie dans des conditions particulières.

Dans tous les cas, on détermine la fréquence de charge à partir du spectre d'impédance.

La fréquence de charge à utiliser est déterminée à partir du spectre d'impédance.

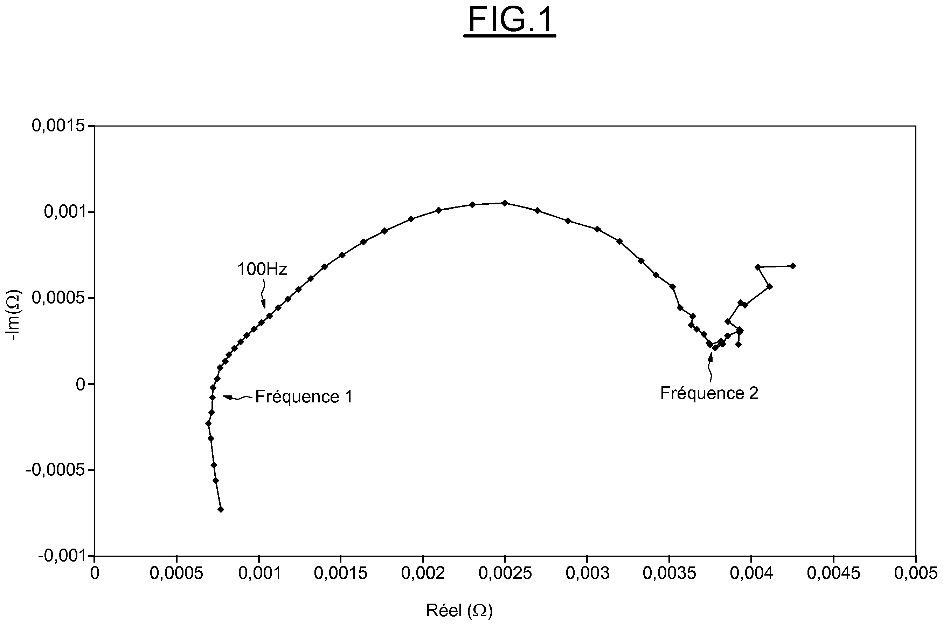

La figure 1 est une représentation de l'impédance dans l'espace complexe en fonction de la fréquence. En d'autres termes, la figure 1 représente un ensemble de points dont les coordonnées sont la partie imaginaire et la partie réelle de l'impédance, chaque point représentant une fréquence différente du courant de charge.

Par ailleurs, la figure 1 illustre la variation d'impédance de la cellule d'une batterie soumise à une température de 0°C.

Sur une telle représentation, on identifie deux points correspondant à des fréquences caractéristiques de la charge de la batterie.

Le premier point caractéristique correspond à une impédance dont la partie imaginaire est nulle. Il est identifié sur la figure 1 par la référence « Frequence 1 » et correspond dans le cas illustré par la figure 1, à une fréquence de 0,9kHz. Par la suite, on fera référence à la fréquence associée à ce point comme à la fréquence de la résistance de l'électrolyte.

Le deuxième point caractéristique correspond à une impédance dont la partie imaginaire est minimale pour une partie réelle supérieure à la partie réelle de l'impédance associée au premier point caractéristique. Il est identifié sur la figure 1 par la référence « Frequence 2 » et correspond dans le cas illustré par la figure 1, à une fréquence de 0,15Hz. Par la suite, on fera référence à la fréquence associée à ce point comme la fréquence de la résistance de transfert de charge.

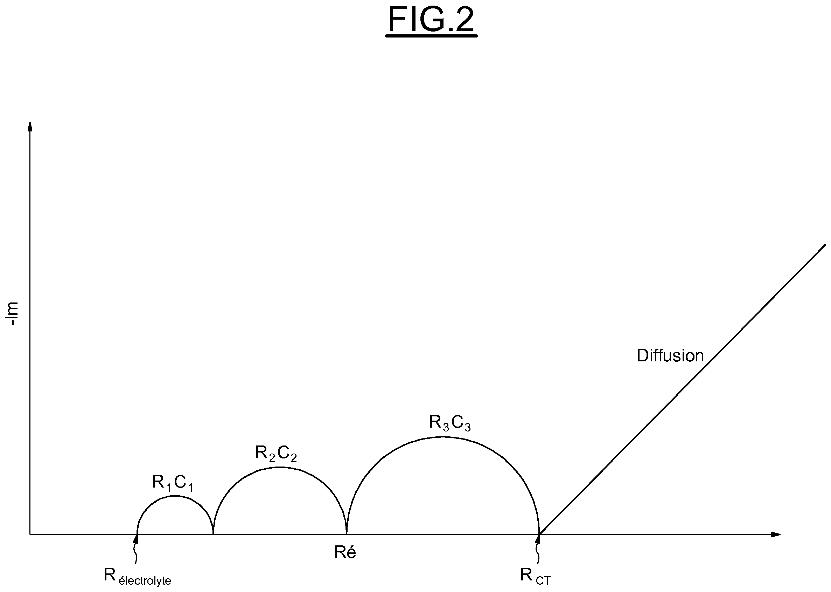

De manière plus générale, lorsque l'on réalise un balayage en fréquence de l'impédance d'une cellule de batterie, on détecte des minimas successifs de la partie imaginaire de l'impédance pour des valeurs croissantes de la partie réelle de l'impédance. La figure 2 illustre de façon schématique une telle évolution de l'impédance.

Le premier minimum de la partie imaginaire de l'impédance correspond à l'impédance associée à la fréquence de la résistance de l'électrolyte (i.e. Rélectrolyte)

Le dernier minimum avant la zone de diffusion correspond à l'impédance associée à la fréquence de résistance de transfert de charge RCT. On note que l'impédance de la résistance de transfert de charge est liée par l'équation suivante à l'impédance associée à la fréquence de la résistance de l'électrolyte et aux impédances des autres minima (notés R1, R2 et R3).

$$R\acute{e}lectrolyte + R1 + R2 + R3 = RCT$$

Dans le cas d'une batterie Li-ion, R1 peut être considérée comme la résistance de la SEI (« Solid Electrolyte Interphase »), R2 peut être la résistance du transfert de charge de l'électrode positive et R3 peut être la résistance du transfert de charge de l'électrode négative (Figure 2). Il est possible de considérer qu'il y a un nombre plus important de circuit RC en série. Ainsi, la fréquence de résistance de transfert de charge RCT sera la somme de ces différentes contributions. D'un autre point de vue, il est possible de considérer la fréquence de résistance de transfert de charge RCT comme étant la fréquence juste avant les phénomènes de diffusion caractériser par la zone de diffusion plus communément appelée zone de Warburg ou droite de Warburg (Figure 2).

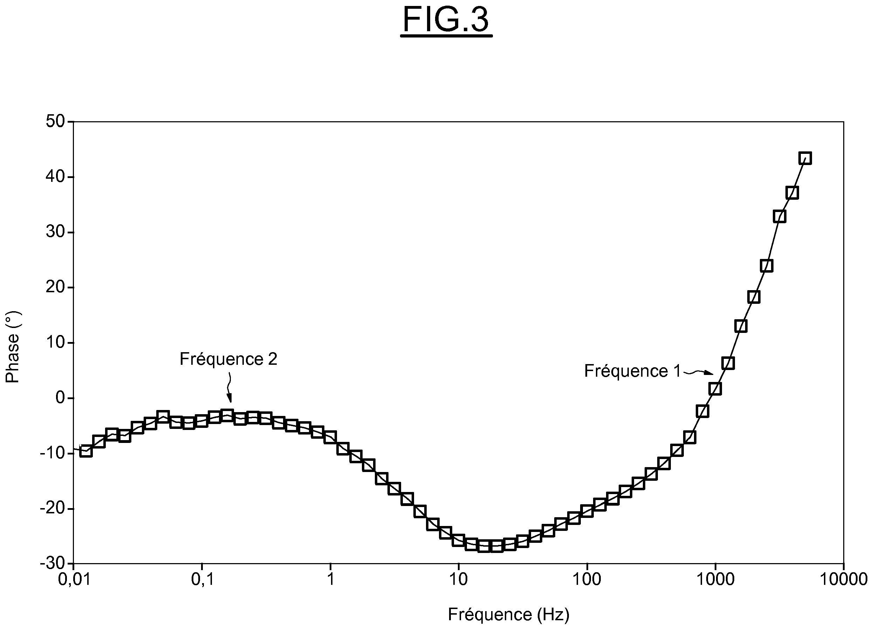

Alternativement, la fréquence de résistance de l'électrolyte et la fréquence de résistance de transfert de charge peuvent être déterminées en fonction du déphasage de la tension aux bornes de l'impédance par rapport au courant circulant entre les bornes de l'impédance. Sur la figure 3, on peut voir une représentation de l'impédance en fonction du déphasage. A partir d'une telle représentation, on détermine la fréquence de résistance de l'électrolyte comme la fréquence pour laquelle le déphasage s'annule et la fréquence de résistance de transfert de charge comme la fréquence pour laquelle la dérivée du déphasage en fonction de la fréquence s'annule.

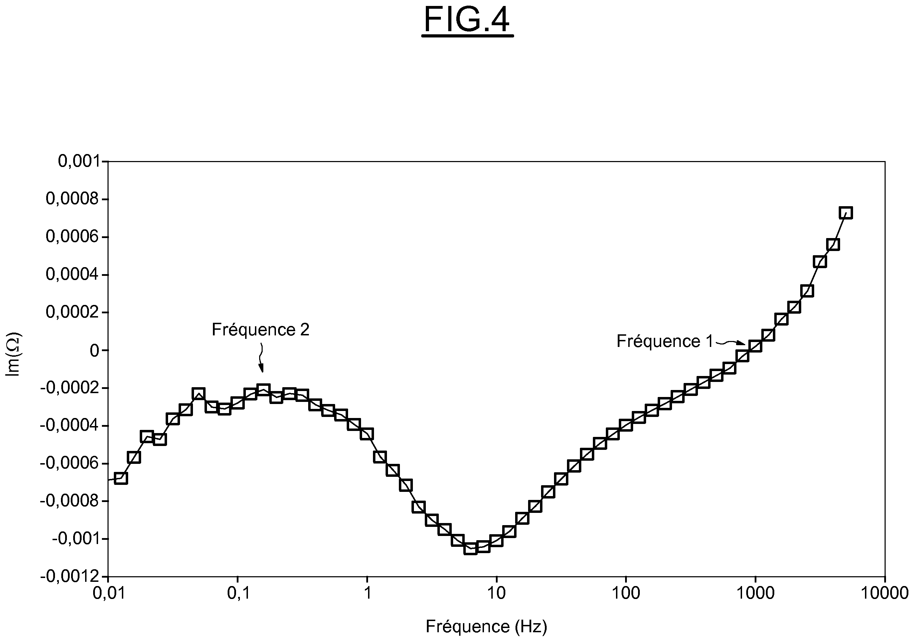

Alternativement, la fréquence de résistance de l'électrolyte et la fréquence de résistance de transfert de charge peuvent être déterminées en fonction de la contribution de la partie imaginaire sur l'impédance de la cellule en fonction de la fréquence. Sur la figure 4, on peut voir une représentation de partie imaginaire sur l'impédance de la cellule en fonction de la fréquence. A partir d'une telle représentation, on détermine la fréquence de résistance de l'électrolyte comme la fréquence pour laquelle la partie imaginaire s'annule et la fréquence de résistance de transfert de charge comme la fréquence pour laquelle la dérivée de la partie imaginaire en fonction de la fréquence s'annule.

Cependant, le procédé doit être mis en oeuvre en perturbant le moins possible la mesure de tension permettant de déterminer l'impédance. On rappelle que l'impédance correspond au rapport de la tension par le courant aux bornes de l'élément mesuré. Ainsi, plus le module de l'impédance sera important à une fréquence donnée plus la mesure de la tension variera et rendra la mesure de la tension difficile. Il faut donc tenir compte de cela pour sélectionner la fréquence ou la gamme de fréquence à utiliser. Ainsi, même si la fréquence de résistance de transfert de charge est potentiellement utilisable, il s'avère qu'elle risque de trop perturber la mesure tension. Au contraire, la fréquence de résistance de l'électrolyte présente le module de l'impédance le plus faible mais cette haute fréquence peut être difficile à contrôler avec de l'électronique de puissance. De même, l'utilisation de basses fréquences peut être préjudiciable car l'électronique de puissance requiert des commutations à des fréquences pouvant aller du Hz au kHz. De plus, l'utilisation d'une haute fréquence ne va pas avoir un grand intérêt car à cette fréquence seulement l'électrolyte est mis en jeu alors qu'il est plus intéressant de mobiliser les autres parties de la cellule pour la charge, telles que le matériau actif et plus particulièrement la surface des matériaux actifs (i.e. la capacité de double couche).

Ainsi on préfèrera utiliser une fréquence de courant supérieure à la résistance de l'électrolyte (Fréquence 1) et inférieure à la fréquence de résistance de transfert de charge (Fréquence 2).

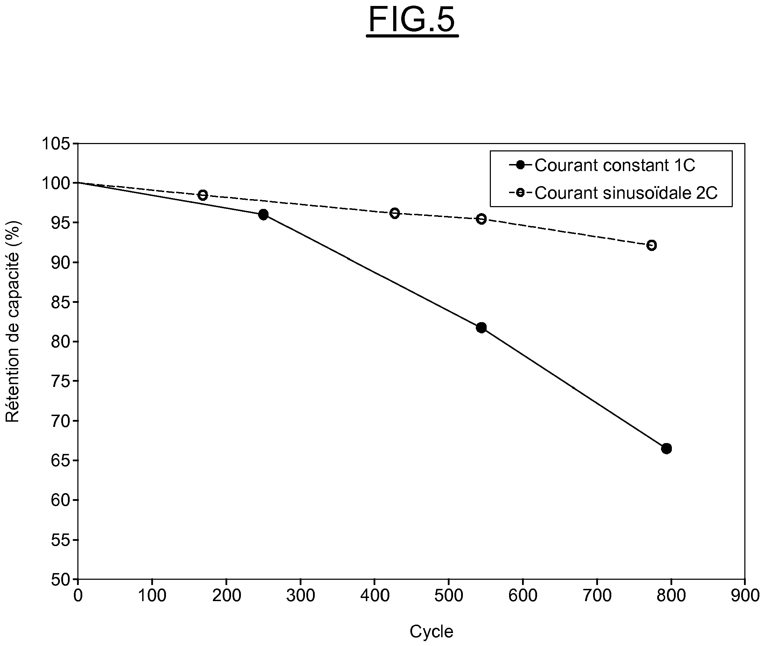

La figure 5 illustre les effets d'un courant de fréquence égale à 100Hz sur une cellule de batterie.

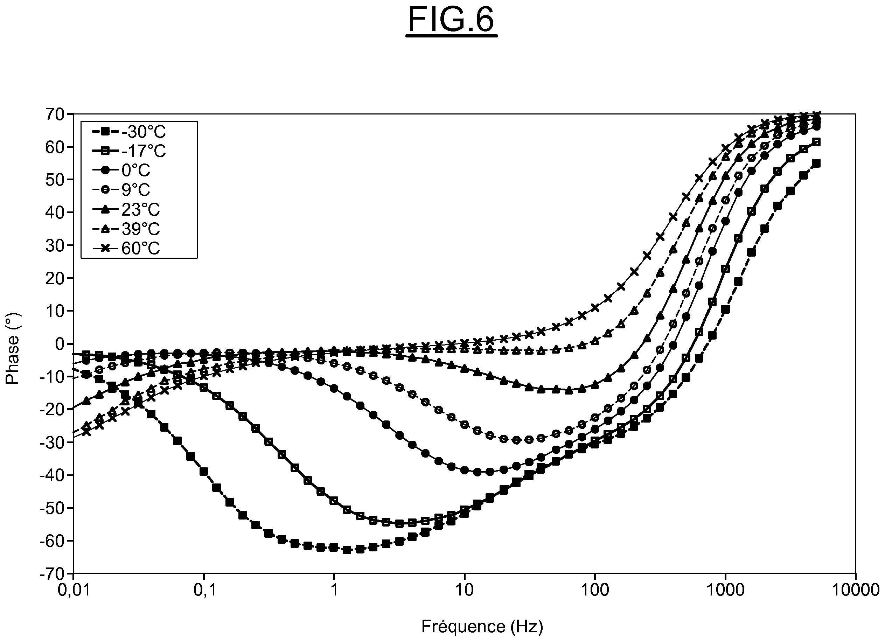

Portée à 0°C, une cellule a été testée par un courant 1C de référence. Le courant 1C correspond au courant qu'il faut pour décharger la cellule en 1 heure. Une autre cellule similaire a été testée par un courant sinusoïdal de 2C pic à pic pour un courant moyen de 37A, également à une température de 0°C. Il apparait que, l'emploi d'un courant de charge pulsé a un effet bénéfique sur la rétention de capacité (i.e. sa durée de vie). La figure 6 illustre l'évolution du déphasage en fonction de la fréquence lorsque la température varie. Comme on peut le voir, quelle que soit la température de la batterie, la forme générale du spectre et la détermination des fréquences caractéristiques demeurent identiques. Il en ressort par ailleurs que le courant de charge voit sa fréquence évoluer entre 10Hz et 300Hz lorsque la température varie de 9°C à -30°C.

Le procédé de charge permet également d'améliorer la durée de vie des batteries Li-ion à base de graphite et d'effectuer des charges plus profondes. Il est apparu que le courant pulsé permet une charge plus profonde de l'ordre de 10% et plus. Ceci se traduit par un gain d'autonomie de la batterie. Par profondeur de charge, on entend l'aptitude à emmagasiner une quantité plus ou moins importante d'énergie (en Ah) pour une même cellule de batterie. Plus la quantité est importante, plus la profondeur de charge est importante.

Le procédé de charge est applicable à des batteries Li-ion à électrode négative base de graphite mais également à des batteries Li-ion à base de silicium (Si), de germanium (Ge), d'étain (Sn), de titanate sous forme de $TiO_2$ ou de $Li_4Ti_5O_{12}$ ou de composites ternaires carbonés à base de métaux de transition et d'étain. Dans ces cas, les avantages peuvent être une amélioration de la durée de vie, un temps de charge raccourci ou une augmentation de l'autonomie de la batterie (+10% de capacité).

Le courant de charge peut être de type créneau, triangulaire ou sinusoïdale ou autre. Toutefois, le respect de la consigne en fréquence prévaut sur la forme du courant. Le courant de charge peut présenter un décalage de sorte qu'il ne repasse pas par une valeur nulle. Il est toutefois préféré de minimiser la composante de courant continu.

Le procédé de charge permet d'appliquer un courant présentant une périodicité afin d'améliorer la durée de vie de la batterie, d'augmenter la profondeur de charge ou de raccourcir le temps de charge tout en utilisant une puissance moyenne de charge plus importante que lors de l'utilisation de la charge de la batterie par un courant continu, et ce pour une dégradation identique de la durée de vie de la batterie.

Il est ainsi possible de choisir entre une diminution du temps de charge et une amélioration de la durée de vie. A courant moyen ou puissance moyenne équivalente, la durée de vie est améliorée avec l'emploi d'un courant de charge périodique. Une charge à une puissance moyenne ou avec un courant moyen plus élevé mais périodique permet d'obtenir une dégradation des caractéristiques de la batterie équivalente à celle observée lors d'une charge avec un courant continu.

Le système de charge d'une batterie de véhicule automobile comprend un moyen de détermination de la fréquence de résistance de l'électrolyte de la batterie et un moyen de détermination de la fréquence de résistance de transfert de charge de la batterie, connectés à un moyen de commande du courant de charge de la batterie.

Le moyen de détermination de la fréquence de résistance de l'électrolyte de la batterie et le moyen de détermination de la fréquence de résistance de transfert de charge de la batterie comprennent chacun un dispositif de spectrographie de l'impédance de la batterie, ou une cartographie de fréquence en fonction de la température. Alternativement, les moyens de détermination peuvent mutualiser un unique dispositif de spectrographie.

Le moyen de commande du courant de charge de la batterie est apte à commander la charge de la batterie par un courant présentant une fréquence supérieure à la fréquence de résistance de l'électrolyte de la batterie et inférieure à la fréquence de résistance de transfert de charge de la batterie.

Le système de charge peut également comprendre un moyen d'ajustement de la fréquence du courant de charge en fonction de la température de la batterie. Le moyen d'ajustement est apte à commander les moyens de détermination de sorte que la fréquence de résistance de l'électrolyte de la batterie et la fréquence de résistance de transfert de charge de la batterie soient déterminées à nouveau lorsque la température change. Les nouvelles fréquences ainsi déterminées permettent de déterminer une nouvelle fréquence du courant de charge.

Le système de charge peut également être désactivé de sorte que le chargeur de batterie fonctionne avec un courant de charge continu.

Le système et le procédé de charge permettent donc de déterminer les fréquences caractéristiques de la batterie à charger et de déterminer la fréquence du courant de charge à employer. Cette détermination est indépendante de la batterie utilisée et permet de prendre en compte les effets de la température de sorte à améliorer la charge et la durée de vie de la batterie.

**Revendications**

1. Procédé de charge d'une batterie de véhicule automobile optimisé en fonction de la température de ladite batterie, **caractérisé par le fait que** l'on met en oeuvre les étapes suivantes :

   on détermine la fréquence de résistance électrique de l'électrolyte de la batterie (Fréquence 1),
   on détermine la fréquence de résistance électrique de transfert de charge de la batterie (Fréquence 2), et
   on charge la batterie avec un courant à une fréquence de courant de charge supérieure à la fréquence de résistance de l'électrolyte de la batterie et inférieure à la fréquence de résistance de transfert de charge de la batterie.

2. Procédé selon la revendication 1, dans lequel à partir d'une représentation complexe de l'impédance en fonction de la fréquence du courant de charge, on détermine la fréquence de résistance de l'électrolyte (Fréquence 1) comme la fréquence de l'impédance présentant une valeur nulle de sa partie imaginaire et la plus petite valeur de la partie réelle et la fréquence de résistance de transfert de charge (Fréquence 2) comme la fréquence de l'impédance présentant une valeur minimale de sa partie imaginaire et la plus grande valeur de la partie réelle.

3. Procédé selon la revendication 1, dans lequel, à partir d'une représentation de l'impédance en fonction du déphasage du courant de charge, on détermine la fréquence de résistance de l'électrolyte (Fréquence 1) comme la fréquence pour laquelle le déphasage s'annule et la fréquence de résistance de transfert de charge (Fréquence 2) comme la fréquence pour laquelle la dérivée du déphasage en fonction de la fréquence s'annule.

4. Procédé selon la revendication 1, dans lequel à partir d'une représentation partie imaginaire sur l'impédance de la cellule en fonction de la fréquence du courant de charge, on détermine la fréquence de résistance de l'électrolyte (Fréquence 1) comme la fréquence pour laquelle la partie imaginaire s'annule et la fréquence de résistance de transfert de charge (Fréquence 2) comme la fréquence pour laquelle la dérivée de la partie imaginaire en fonction de la fréquence s'annule.

5. Procédé selon la revendication 1, dans lequel la fréquence de courant de charge est comprise entre 10Hz et 300Hz, de préférence égale à 100Hz.

6. Procédé selon l'une quelconque des revendications précédentes, dans lequel on détermine de nouvelles fréquences de résistance de l'électrolyte de la batterie (Fréquence 1) et de résistance de transfert de charge de la batterie (Fréquence 2) lorsque la température change.

7.  Système de charge d'une batterie de véhicule automobile optimisé en fonction de la température de ladite batterie, **caractérisé par le fait qu'**il comprend un moyen de détermination de la fréquence de résistance électrique de l'électrolyte de la batterie (Fréquence 1), un moyen de détermination de la fréquence de résistance électrique de transfert de charge de la batterie (Fréquence 2), et un moyen de commande du courant de charge de la batterie apte à commander la charge de la batterie par un courant présentant une fréquence supérieure à la fréquence de résistance de l'électrolyte de la batterie et inférieure à la fréquence de résistance de transfert de charge de la batterie.

8.  Système selon la revendication 7, comprenant un moyen d'ajustement de la fréquence du courant de charge en fonction de la température de la batterie, le moyen d'ajustement étant apte à commander les moyens de détermination de sorte que la fréquence de résistance de l'électrolyte de la batterie (Fréquence 1) et la fréquence de résistance de transfert de charge de la batterie (Fréquence 2) soient déterminées à nouveau lorsque la température change.

9.  Système selon l'une quelconque des revendications 7 ou 8, dans lequel le moyen de détermination de la fréquence de résistance de l'électrolyte de la batterie (Fréquence 1) et le moyen de détermination de la fréquence de résistance de transfert de charge de la batterie (Fréquence 2) comprennent chacun une cartographie de la fréquence du courant de charge en fonction de la température.

10. Système selon l'une quelconque des revendications 7 ou 8, dans lequel le moyen de détermination de la fréquence de résistance de l'électrolyte de la batterie (Fréquence 1) et le moyen de détermination de la fréquence de résistance de transfert de charge de la batterie (Fréquence 2) comprennent chacun un dispositif de spectrographie de l'impédance de la batterie.

## Patentansprüche

1.  Verfahren zum Laden einer Kraftfahrzeugbatterie, das in Abhängigkeit von der Temperatur der Batterie optimiert ist, **dadurch gekennzeichnet, dass** die folgenden Schritte durchgeführt werden:

    es wird die elektrische Widerstandsfrequenz des Elektrolyten der Batterie bestimmt (Frequenz 1),

    es wird die elektrische Ladungsübergangswiderstands-Frequenz der Batterie bestimmt (Frequenz 2), und

    die Batterie wird mit einem Strom mit einer Ladestromfrequenz geladen, welche höher als die Widerstandsfrequenz des Elektrolyten der Batterie und niedriger als die Ladungsübergangswiderstands-Frequenz der Batterie ist.

2.  Verfahren nach Anspruch 1, wobei ausgehend von einer komplexen Darstellung der Impedanz als Funktion der Frequenz des Ladestroms die Widerstandsfrequenz des Elektrolyten (Frequenz 1) als die Frequenz der Impedanz bestimmt wird, die einen Wert null ihres Imaginärteils und den kleinsten Wert des Realteils aufweist, und die Ladungsübergangswiderstands-Frequenz (Frequenz 2) als die Frequenz der Impedanz, die einen minimalen Wert ihres Imaginärteils und den größten Wert des Realteils aufweist.

3.  Verfahren nach Anspruch 1, wobei ausgehend von einer Darstellung der Impedanz als Funktion der Phasenverschiebung des Ladestroms die Widerstandsfrequenz des Elektrolyten (Frequenz 1) als die Frequenz bestimmt wird, für welche die Phasenverschiebung zu null wird, und die Ladungsübergangswiderstands-Frequenz (Frequenz 2) als die Frequenz, für welche die Ableitung der Phasenverschiebung als Funktion der Frequenz zu null wird.

4.  Verfahren nach Anspruch 1, wobei ausgehend von einer Darstellung des Imaginärteils der Impedanz der Zelle als Funktion der Frequenz des Ladestroms die Widerstandsfrequenz des Elektrolyten (Frequenz 1) als die Frequenz bestimmt wird, für welche der Imaginärteil zu null wird, und die Ladungsübergangswiderstands-Frequenz (Frequenz 2) als die Frequenz, für welche die Ableitung des Imaginärteils als Funktion der Frequenz zu null wird.

5.  Verfahren nach Anspruch 1, wobei die Ladestromfrequenz zwischen 10 Hz und 300 Hz liegt und vorzugsweise 100 Hz beträgt.

6.  Verfahren nach einem der vorhergehenden Ansprüche, wobei eine neue Widerstandsfrequenz des Elektrolyten der Batterie (Frequenz 1) und eine neue Ladungsübergangswiderstands-Frequenz der Batterie (Frequenz 2) bestimmt werden, wenn sich die Temperatur ändert.

7.  System zum Laden einer Kraftfahrzeugbatterie, das in Abhängigkeit von der Temperatur der Batterie optimiert ist, **dadurch gekennzeichnet, dass** es umfasst:

ein Mittel zur Bestimmung der elektrischen Widerstandsfrequenz des Elektrolyten der Batterie (Frequenz 1),

ein Mittel zur Bestimmung der elektrischen Ladungsübergangswiderstands-Frequenz der Batterie (Frequenz 2), und

ein Mittel zur Steuerung des Ladestroms der Batterie, das geeignet ist, die Ladung der Batterie durch einen Strom zu steuern, der eine Frequenz aufweist, die höher als die Widerstandsfrequenz des Elektrolyten der Batterie und niedriger als die Ladungsübergangswiderstands-Frequenz der Batterie ist.

8. System nach Anspruch 7, welches ein Mittel zur Anpassung der Frequenz des Ladestroms in Abhängigkeit von der Temperatur der Batterie umfasst, wobei das Mittel zur Anpassung geeignet ist, die Mittel zur Bestimmung derart zu steuern, dass die Widerstandsfrequenz des Elektrolyten der Batterie (Frequenz 1) und die Ladungsübergangswiderstands-Frequenz der Batterie (Frequenz 2) erneut bestimmt werden, wenn sich die Temperatur ändert.

9. System nach einem der Ansprüche 7 oder 8, wobei das Mittel zur Bestimmung der Widerstandsfrequenz des Elektrolyten der Batterie (Frequenz 1) und das Mittel zur Bestimmung der Ladungsübergangswiderstands-Frequenz der Batterie (Frequenz 2) jeweils ein Kennfeld der Frequenz des Ladestroms als Funktion der Temperatur umfassen.

10. System nach einem der Ansprüche 7 oder 8, wobei das Mittel zur Bestimmung der Widerstandsfrequenz des Elektrolyten der Batterie (Frequenz 1) und das Mittel zur Bestimmung der Ladungsübergangswiderstands-Frequenz der Batterie (Frequenz 2) jeweils eine Vorrichtung zur Spektrographie der Impedanz der Batterie umfassen.

**Claims**

1. Method for charging a motor vehicle battery, optimized as a function of the temperature of said battery, **characterized in that** it uses the following steps:

   determining the electrical resistance frequency of the electrolyte of the battery (Frequency 1), determining the charge transfer electrical resistance frequency of the battery (Frequency 2), and charging the battery with a current with a charge current frequency which is higher than the battery electrolyte resistance frequency and lower than the battery charge transfer resistance frequency.

2. Method according to Claim 1, wherein from a complex representation of the impedance as a function of the charge current frequency, the electrolyte resistance frequency (Frequency 1) is determined as the impedance frequency with a zero value of its imaginary part and the lowest value of the actual part, and the charge transfer resistance frequency (Frequency 2) as the impedance frequency with a minimal value of its imaginary part and the highest value of the actual part.

3. Method according to Claim 1, wherein from a representation of the impedance as a function of the charge current phase shift, the electrolyte resistance frequency (Frequency 1) is determined as the frequency for which the phase shift is cancelled out, and the charge transfer resistance frequency (Frequency 2) as the frequency for which the derivative of the phase shift as a function of frequency is cancelled out.

4. Method according to Claim 1, wherein from a representation of the imaginary part over the cell impedance as a function of the charge current frequency, the electrolyte resistance frequency (Frequency 1) is determined as the frequency for which the imaginary part is cancelled out, and the charge transfer resistance frequency (Frequency 2) as the frequency for which the derivative of the imaginary part as a function of frequency is cancelled out.

5. Method according to Claim 1, wherein the charge current frequency lies between 10 Hz and 300 Hz, preferably equal to 100 Hz.

6. Method according to any of the preceding claims, wherein new frequencies of the battery electrolyte resistance (Frequency 1) and of the battery charge transfer resistance (Frequency 2) are determined when the temperature changes.

7. System for charging a motor vehicle battery, optimized as a function of the temperature of said battery, **characterized in that** it comprises:

   a means for determining the electrical resistance frequency of the electrolyte of the battery (Frequency 1), a means for determining the charge transfer electrical resistance frequency of the battery (Frequency 2), and a means for controlling the battery charge current and able to control the battery charging by a current with a frequency which is higher than the battery electrolyte resistance frequency and lower than the battery charge transfer resistance frequency.

**8.** System according to Claim 7, comprising a means for adjusting the charge current frequency as a function of the battery temperature, the adjustment means being able to control the determination means such that the battery electrolyte resistance frequency (Frequency 1) and the battery charge transfer resistance frequency (Frequency 2) are determined again when the temperature changes.

**9.** System according to either of Claims 7 and 8, wherein the means for determining the battery electrolyte resistance frequency (Frequency 1) and the means for determining the battery charge transfer resistance frequency (Frequency 2) each comprise a map of the charge current frequency as a function of temperature.

**10.** System according to either of Claims 7 and 8, wherein the means for determining the battery electrolyte resistance frequency (Frequency 1) and the means for determining the battery charge transfer resistance frequency (Frequency 2) each comprise a battery impedance spectrography device.

EP 2 992 584 B1

# FIG.1

FIG.2

## FIG.3

FIG.4

# FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2001037093 A
- US 7227336 B1
- FR 2943188
- FR 2964510
- FR 2974253

**Littérature non-brevet citée dans la description**

- The effects of pulse charging on cycling characteristics of commercial lithium-ion batteries. **LI J et al.** JOURNAL OF POWER SOURCES. ELSEVIER SA, 01 Décembre 2001, vol. 102, 302-309
- Impedance Spectroscopy by Voltage-Step Chronoamperometry Using the Laplace Transform Method in a Lithium-Ion Battery. *Journal of The Electrochemical Society,* 2000, vol. 147 (3), 922-929